# EUROPEAN PATENT APPLICATION

(11) **EP 4 481 895 A1**
(43) Date of publication of application: **25.12.2024**
(21) Application number: 24183329.2
(22) Date of filing: 20.06.2024
(51) Int. Cl.: H01M 10/653, H01M 10/658, H01M 50/209, H01M 50/293, B32B 18/00

(54) **BATTERY MODULE AND BATTERY PACK**

(30) Priority: 20.06.2023 KR 20230078908; 24.05.2024 KR 20240067512
(71) Applicant: SK On Co., Ltd., Seoul 03161 (KR)
(72) Inventor: LEE, Jong Chan, 34124 Daejeon (KR); PARK, Chi Min, 34124 Daejeon (KR); JEONG, Ju Young, 34124 Daejeon (KR)
(74) Representative: Stolmár & Partner Patentanwälte PartG mbB

(57) **Abstract**

An exemplary embodiment of the present disclosure may provide a battery module including a plurality of secondary battery cells housed in a housing member, wherein a flame-retardant composite material is located between the plurality of secondary battery cells, and the flame-retardant composite material includes an insulating layer containing an organic binder and an inorganic long fiber network formed by weaving a plurality of first fibers (wefts) arranged in a first direction and a plurality of second fibers (warps) arranged in a second direction intersecting the first direction.

## Description

### CROSS-REFERENCE TO RELATED APPLICATIONS

This application claims priority under 35 U.S.C. §119 to Korean Patent Application No. 10-2023-0078908, filed on June 20, 2023, in the Korean Intellectual Property Office, the disclosure of which is incorporated herein by reference in its entirety.

### TECHNICAL FIELD

The following disclosure relates to a battery module and a battery pack that have improved safety.

### BACKGROUND

Secondary batteries are widely applied to not only portable devices but also electric vehicles (EVs) or hybrid electric vehicles (HEVs) driven by an electric drive source, because the secondary batteries are easy to apply according to product groups and have excellent electrical characteristics such as high energy density.

When a higher output voltage is required, a battery pack may be formed by connecting a plurality of battery cells in series or in parallel. Typically, a battery module including at least one battery cell is formed first, and a battery pack or a battery rack is formed by adding at least one battery module and other components.

Meanwhile, since the secondary battery has a risk of explosion when overheated, it is one of the important tasks to handle to secure safety. When abnormal heat generation occurs due to various causes such as overcharging, overcurrent, short circuit, and physical shock, a flame or fire may occur, which ultimately leads to an explosion of the secondary battery due to a thermal runaway phenomenon. In a case where a plurality of secondary batteries are included, such as battery modules or battery packs, a safety issue becomes more important.

Conventionally, in order to prevent a flame from spreading, methods of providing a cooling member for cooling in a battery module or a cartridge including a thermally conductive additive have been performed. However, these methods are intended to cool heat generated during a battery operation and do not function in thermal runaway situations such as cell explosion.

As another conventional technique, a method of providing highly fire-resistant materials such as a mica sheet or ceramic wool in a battery module has been performed. However, these materials cause dust or debris in the battery module, which causes short circuits or failures, and as a result, long-term stability of the battery module may not be secured. Furthermore, since the materials such as a mica sheet or ceramic wool not only have high specific gravity (density) but also have low adhesive strength, when these materials are stacked together with battery cells, a thickness of an adhesive to be applied should be thick, and thus, there are limits to improving the energy density of the battery module and achieving weight reduction.

Therefore, there is a need to develop a battery module that may suppress the spread of a flame when a fire occurs in the battery module and may secure long-term stability.

### SUMMARY

An embodiment of the present disclosure is directed to providing a battery module including a flame-retardant composite material that may prevent a short circuit caused by dust or debris during a normal operation of the battery module and may suppress the spread of heat or a flame when ignition occurs.

Another embodiment of the present disclosure is directed to providing a battery module that may achieve both weight reduction and improved flame retardant performance.

In addition, objects of the present disclosure to be achieved are not limited to the above-mentioned objects, and other objects that are not mentioned may be obviously understood by those skilled in the art to which the present disclosure pertains from the following description.

In one general aspect, a battery module includes a plurality of secondary battery cells housed in a housing member, wherein a flame-retardant composite material is located between the plurality of secondary battery cells, and the flame-retardant composite material includes an insulating layer containing an organic binder and an inorganic long fiber network formed by weaving a plurality of first fibers (wefts) arranged in a first direction and a plurality of second fibers (warps) arranged in a second direction intersecting the first direction.

In an exemplary embodiment, the insulating layer may further contain an inorganic filler.

In an exemplary embodiment, the inorganic filler may be uniformly distributed in the inorganic long fiber network.

In an exemplary embodiment, the inorganic filler may include one or two selected from an endothermic material and a thermally expandable material.

In an exemplary embodiment, the insulating layer may further contain an additive.

In an exemplary embodiment, the additive may include a flame retardant.

In an exemplary embodiment, the insulating layer may include a plurality of unit insulating layers.

In an exemplary embodiment, the directions of the first fibers (wefts) in each of the unit insulating layers disposed to be in contact with each other in the plurality of unit insulating layers may be the same as or different from each other.

In an exemplary embodiment, the unit insulating layer may further contain an inorganic filler.

In an exemplary embodiment, the plurality of unit insulating layers may independently contain, with respect to the total weight, 40 to 80 wt% of inorganic long fibers, 10 to 30 wt% of an organic binder, 1 to 15 wt% of an inorganic filler, and 5 to 20 wt% of an additive.

In an exemplary embodiment, an average diameter of the inorganic filler may be 1 um to 50 um.

In an exemplary embodiment, the endothermic material may include one or two or more selected from aluminum hydroxide, talc, calcium carbonate, diatomaceous earth, titanium oxide, zeolite, and white carbon.

In an exemplary embodiment, the thermally expandable material may include one or two or more selected from mica, biotite, muscovite, vermiculite, kaolin, thermally expandable graphite, perlite, and bentonite.

In an exemplary embodiment, the inorganic long fiber may include a glass long fiber.

In an exemplary embodiment, the organic binder may include a thermosetting resin, a thermoplastic resin, or a combination thereof.

In an exemplary embodiment, a thickness of the flame-retardant composite material may be 0.12 mm to 40 mm.

In an exemplary embodiment, the secondary battery cell may include an electrode assembly in which a plurality of negative electrodes and positive electrodes are alternately stacked with a separator as a boundary, and a pouch exterior material surrounding the electrode assembly.

In another general aspect, a battery pack includes a plurality of secondary battery cells; a flame-retardant composite material located between the plurality of secondary battery cells; and a pack housing for housing the plurality of secondary battery cells and the flame-retardant composite material, wherein the flame-retardant composite material includes an insulating layer containing an organic binder and an inorganic long fiber network formed by weaving a plurality of first fibers (wefts) arranged in a first direction and a plurality of second fibers (warps) arranged in a second direction intersecting the first direction.

Other features and aspects will be apparent from the following detailed description, the drawings, and the claims.

### BRIEF DESCRIPTION OF THE DRAWINGS

FIG. 1 is an exploded perspective view showing a battery module according to an exemplary embodiment of the present disclosure.
FIG. 2 illustrates a battery module according to an exemplary embodiment of the present disclosure.
FIG. 3 illustrates a battery pack according to an exemplary embodiment of the present disclosure.

### DETAILED DESCRIPTION OF EMBODIMENTS

Unless the context clearly indicates otherwise, the singular forms of the terms used in the present specification may be interpreted as including the plural forms.

A numerical range used in the present specification includes upper and lower limits and all values within the ranges thereof, all double limited values, and all possible combinations of the upper and lower limits in the numerical range defined in different forms. Unless otherwise specifically defined in the present specification, values out of the numerical range that may occur due to experimental errors or rounded values also fall within the defined numerical range.

The expression "comprise(s)" described in the present specification is intended to be an open-ended transitional phrase having an equivalent meaning to "include(s)", "contain(s)", "have (has)", or "are (is) characterized by", and does not exclude elements, materials, or steps, all of which are not further recited herein.

The expression such as "woven inorganic long fiber" or "woven inorganic long fiber network" referred to in the present specification refers to an inorganic long fiber network formed by weaving a plurality of first fibers (wefts) arranged in a first direction and a plurality of second fibers (warps) arranged in a second direction intersecting the first direction.

In an angle referred to in the present specification, + refers to a clockwise angle and - refers to a counterclockwise angle.

A battery module according to the present disclosure includes a plurality of secondary battery cells housed in a housing member, wherein a flame-retardant composite material is located between the plurality of secondary battery cells, and the flame-retardant composite material includes an insulating layer containing an organic binder and an inorganic long fiber network formed by weaving a plurality of first fibers (wefts) arranged in a first direction and a plurality of second fibers (warps) arranged in a second direction intersecting the first direction.

With the above-described structural combination, during a normal operation of the battery module, dust and short circuits caused by this may be prevented, and the spread of heat or a flame may be effectively suppressed when ignition occurs.

Hereinafter, the flame-retardant composite material will be described in detail.

### <Flame-retardant composite material including insulating layer>

A flame-retardant composite material including a sheet molding compound (SMC) material containing an inorganic long fiber network and an organic binder may not only prevent high temperatures and flames from spreading, but also maintain the initial shape without physical or chemical deformation even in a high-temperature environment, because it has excellent insulation, heat resistance, and fire resistance. In addition, the amount of dust generated from the flame-retardant composite material is minimized, such that a short circuit in the battery module due to foreign substances may be prevented. Furthermore, a battery module having high stability and high energy density may be achieved by lowering a density (specific gravity) of the flame-retardant composite material and minimizing a thickness of an adhesive applied between the secondary battery cell and the flame-retardant composite material when stacking the flame-retardant composite material and the secondary battery cell.

In an exemplary embodiment, as the insulating layer contains the inorganic long fiber network formed by weaving the plurality of first fibers (wefts) arranged in the first direction and the plurality of second fibers (warps) arranged in the second direction intersecting the first direction, excellent insulation and structural stability that are not provided by conventional inorganic short fibers may be provided, and the spread of heat or a flame may be effectively suppressed. In addition, the organic binder is uniformly filled in the inorganic long fiber network formed by weaving the fibers, which may achieve excellent binding strength and excellent durability.

In an exemplary embodiment, an angle at which the first fiber (weft) and the second fiber (warp) intersect may be 30 to 90°. As the inorganic long fiber network is formed by weaving the fibers in the angular range, excellent insulation and durability may be achieved. Specifically, the angle may be 45 to 90°C, and more specifically, may be 60 to 90°C.

In an exemplary embodiment, the insulating layer may further contain an additive, and the additive may include a flame retardant.

The insulating layer further contains a flame retardant as an additive, such that long-term stability of the flame-retardant composite material may be further improved. The flame retardant may include an organic flame retardant, an inorganic flame retardant, or a combination thereof, and the organic flame retardant may include one or more selected from the group consisting of a phosphorus-based flame retardant, a boron-based flame retardant, a halogen-based flame retardant, and a nitrogen-based flame retardant.

As an example, the phosphorus-based flame retardant may include a phosphate compound, a phosphonate compound, a phosphinate compound, a phosphineoxide compound, a phosphazene compound, or a metal salt thereof. The boron-based flame retardant may include sodium polyborate, sodium borate, zinc borate, and the like. The halogen-based flame retardant may include a bromine-based flame retardant or a chlorine-based flame retardant, the bromine-based flame retardant may include decabromodiphenyl ethane, decabromodiphenyl ether, tetrabromobisphenol A, a tetrabromobisphenol A-epoxy oligomer, a brominated epoxy oligomer, octabromo-1,3,3-trimethyl-1-phenylindan, ethylene-bis(tetrabromophthalimide), 2,4,6-tris-(2,4,6-tribromophenoxy)-1,3,5-triazine, and the like, and the chlorine-based flame retardant may include chlorinated paraffins, chlorinated polyethylene (CPE), an aliphatic chlorine-based flame retardant, and the like. The nitrogen-based flame retardant may include piperazine pyrophosphate, melamine polyphosphate, ammonium polyphosphate (APP), a guanidine compound, a melamine compound, and the like.

The inorganic flame retardant may include magnesium hydroxide, aluminum hydroxide, antimony trioxide, antimony tetroxide, antimony pentoxide, antimony sodium carbonate, antimony metal, antimony trichloride, antimony pentachloride, barium metaborate, zirconium oxide, zinc borate, zinc stannate, or a combination thereof. Advantageously, the phosphorus-based flame retardant is preferred because it has excellent flame retardant performance and does not emit toxic hazardous substances, but the present disclosure is not limited by the specific type of flame retardant.

In an exemplary embodiment, the insulating layer may further contain an inorganic filler. As the insulating layer further contains an inorganic filler, the spread of heat or a flame may be more effectively suppressed, and durability may be further improved. Specifically, when a fire occurs in the battery module, the temperature may rise to about 1200°C, and an explosion may be caused by an increase in temperature and pressure inside the module. Accordingly, the flame-retardant composite material includes the insulating layer in which a composite of a woven inorganic long fiber network, an organic binder, and an inorganic filler is contained, such that excellent insulation and durability may be achieved, and the spread of fire or a flame may be effectively suppressed. The inorganic filler may be uniformly distributed in the inorganic long fiber network. Therefore, structural stability may be achieved in all temperature ranges, and long-term stability may be secured by suppressing dust or debris resulting from the inorganic filler. Here, the uniform distribution of the inorganic filler in the inorganic long fiber network may mean that the inorganic filler is uniformly distributed in the inorganic long fiber network.

The shape of the inorganic filler is not particularly limited, and may be, for example, a granular shape, a fibrous shape, a rod shape, a spherical shape, a plate shape, or a flake shape. Specifically, the shape of the inorganic filler may be a granular shape. When the shape of the inorganic filler is a granular shape, the inorganic filler may be more uniformly distributed in the woven inorganic long fiber network, and the spread of fire or a flame may be effectively suppressed.

The inorganic filler may be used without limitation as long as it effectively prevents the spread of heat or a flame in the insulating layer and improves durability. For example, the inorganic filler may include one or a mixture of two or more selected from a metal hydroxide, mica, biotite, muscovite, sericite, a metal oxide, a metal carbonate, silica, diatomaceous earth, dosonite, barium sulfate, talc, clay, montmorillonite, bentonite, activated clay, sepiolite, imogolite, a glass bead, silica-based balloon, aluminum nitride, boron nitride, silicon nitride, carbon black, graphite, carbon fiber, carbon balloon, charcoal powder, potassium titanate, magnesium sulfate, lead zirconate titanate, zinc stearate, calcium stearate, aluminum borate, molybdenum sulfide, silicon carbide, stainless steel fiber, zinc borate, various magnetic powders, slag fiber, fly ash, and dehydrated sludge. This is merely an example, and the present disclosure is not limited thereto.

In an exemplary embodiment, the inorganic filler may include one or two selected from an endothermic material and a thermally expandable material. The insulating layer may contain, as an inorganic filler, an endothermic material or a thermally expandable material, or both an endothermic material and a thermally expandable material.

When the insulating layer contains both an endothermic material and a thermally expandable material, the spread of heat or a flame may be effectively suppressed. In this case, a weight ratio of the endothermic material to the thermally expandable material may be 1:0.8 to 1.4. More specifically, the weight ratio of the endothermic material to the thermally expandable material may be 1:1 to 1.4.

The endothermic material may include one or two or more selected from aluminum hydroxide, talc, calcium carbonate, diatomaceous earth, titanium oxide, zeolite, and white carbon, but is not limited thereto. The endothermic material may perform an endothermic function through a dehydration reaction, and may be used without limitation as long as it quickly absorbs high-temperature heat when a fire occurs in the module. Specifically, the endothermic material starts an endothermic reaction at a temperature of 110°C or higher, and may exhibit an endothermic performance of 50% or more, for example, 50% to 80% of the total endothermic performance in a temperature range of 110°C to 150°C. More specifically, the endothermic material may be aluminum hydroxide.

The thermally expandable material may include one or two or more selected from mica, biotite, muscovite, vermiculite, kaolin, thermally expandable graphite, perlite, and bentonite, but is not limited thereto. The thermally expandable material may be used without limitation as long as it blocks a space through which heat or a flame moves or prevents heat or a flame from spreading. Specifically, the thermally expandable material may be mica.

Preferably, as the inorganic filler, aluminum hydroxide and mica may be used together. In this case, when a fire occurs in the module, aluminum hydroxide absorbs heat quickly to suppress the temperature inside the battery module from rising, and at the same time, clay blocks the spread of a flame, such that the best performance may be achieved.

In an exemplary embodiment, when the insulating layer is projected in a direction perpendicular to the surface, a cross-sectional area occupied by the inorganic filler in the woven inorganic long fiber network may be 80% or more. Within the above range, the spread of heat or a flame may be effectively suppressed, and excellent durability may be achieved. The cross-sectional area occupied by the inorganic filler in the woven inorganic long fiber network may be specifically 85% or more, and more specifically 90% or more.

In an exemplary embodiment, an average diameter of the inorganic filler may be 1 um to 50 um. Within the above range, the inorganic filler may be uniformly distributed in the inorganic long fiber network, and excellent insulation and durability may be implemented. Specifically, the average diameter of the inorganic filler may be 5 um to 40 um, and more specifically, may be 10 um to 30 µm.

Specifically, the inorganic long fiber network may be formed by weaving a plurality of first fibers (wefts) arranged in a first direction and a plurality of second fibers (warps) arranged in a second direction intersecting the first direction. In an exemplary embodiment, the inorganic long fiber may be a glass long fiber. As the glass long fibers are included, excellent insulation and durability may be achieved, and a large area and reproducibility of a glass long fiber network may be facilitated.

In addition, the glass long fiber may include a fabric in which fibers (yarns) are arranged in only one direction, and as an example, a unidirectional fabric, a non-crimp fabric, a woven fabric, or the like may be used as the glass long fiber, but the present disclosure is not limited thereto.

In an exemplary embodiment, the organic binder may improve binding strength between the respective components contained in the insulating layer, such as the inorganic long fiber network and the inorganic filler, and may prevent debris such as dust from scattering outside the flame-retardant composite material. The organic binder may include a polymer resin having excellent heat resistance, flexibility, and processability, and more specifically, the organic binder may include a thermosetting resin, a thermoplastic resin, or a combination thereof. Examples of the thermoplastic resin include one or a mixture of two or more selected from synthetic resins, for example, a polyolefin resin such as polypropylene (PP), polyethylene (PE), polybutene, or polypentene, a saturated polyester resin such as polyethylene terephthalate (PET), polystyrene (PS), acrylonitrile-butadiene-styrene (ABS), ethylene-vinyl acetate (EVA), polycarbonate (PC), poly(phenylene ether) (PPE), a (meta)acrylate resin, polyamide (PA), polyvinyl chloride (PVC), a novolak resin, and polyisobutylene (PIB). The thermosetting resin may include, for example, one or a mixture of two or more selected from an unsaturated polyester-based resin, an epoxy resin, a urea resin, a melamine-based resin, a phenolic resin, a resorcinol resin, and polyurethane (PU), and more specifically, the organic binder may be a polyamide-based resin, an unsaturated polyester-based resin, or an epoxy-based resin.

### <Flame-retardant composite material including one or more unit insulating layers>

As another aspect of the present disclosure, the insulating layer included in the flame-retardant composite material may include a plurality of unit insulating layers.

For example, the insulating layer may include 1 to 100, 1 to 50, 1 to 30, 1 to 20, 1 to 10, or 1 to 5 unit insulating layers, but is not limited thereto.

Here, each unit insulating layer may contain an organic binder and an inorganic long fiber network formed by weaving a plurality of first fibers (wefts) arranged in a first direction and a plurality of second fibers (warps) arranged in a second direction intersecting the first direction.

In this case, the directions of the first fibers (wefts) in each of the unit insulating layers disposed to be in contact with each other in the plurality of unit insulating layers may be the same as or different from each other.

As an example, when the insulating layer includes a first unit insulating layer, a second unit insulating layer located in contact with the first unit insulating layer, and a third unit insulating layer located in contact with the second unit insulating layer, a direction in which the first fibers (wefts) of the second unit insulating layer and the third unit insulating layer are arranged with respect to the reference direction (0°) based on the first direction in which the first fibers (wefts) of the first unit insulating layer are arranged may be same as or different from the reference direction.

That is, the direction of the first fiber (weft) of each unit insulating layer may be freely selected within a range of 0° ± 180° with respect to the reference direction.

As an exemplary embodiment, the directions of the first fibers (wefts) in each of the unit insulating layers disposed to be in contact with each other in the plurality of unit insulating layers may be different from each other.

As the directions of the first fibers (wefts) in each of the unit insulating layers disposed to be in contact with each other in the plurality of unit insulating layers are different from each other, the spread of heat or a flame may be more effectively suppressed.

As an example, when the directions in which the first fibers (wefts) in each of the unit insulating layers disposed to be in contact with each other are different from each other, the first fibers (wefts) in each of the unit insulating layers may be arranged to differ by an angle of greater than 0° and 90° or less, specifically 30° to 90°, and more specifically 45° to 90°.

Here, the angular range is merely an example, and the present disclosure is not limited by the angular range.

In an exemplary embodiment, the unit insulating layer may further contain an inorganic filler, which is an endothermic material. When the flame-retardant composite material includes a first unit insulating layer, a second unit insulating layer, and a third unit insulating layer that are sequentially stacked, as the endothermic material is included in the first unit insulating layer, which is an outer layer, and the third unit insulating layer, when a fire occurs in the module, heat may be quickly absorbed, such that a temperature rise inside the battery module may be suppressed or delayed, and a thermal runaway phenomenon may be prevented from occurring in the early stage.

In an exemplary embodiment, the second unit insulating layer may further contain an inorganic filler, which is an endothermic material. As described above, the heat generated inside the module is primarily absorbed by the first unit insulating layer or the third unit insulating layer containing an endothermic material to block heat spread to an adjacent secondary battery cell, and the spread of a flame is secondarily blocked by the second unit insulating layer containing a thermally expandable material, such that the best performance may be achieved.

In an exemplary embodiment, a total thickness of the flame-retardant composite material may be 0.12 mm to 40 mm, 0.22 mm to 30 mm, 0.32 mm to 20 mm, or 0.42 mm to 10 mm. More specifically, the thickness of the flame-retardant composite material may be 0.3 mm to 5 mm, and still more specifically 0.5 mm to 3 mm. As described above, the thickness range is the minimum thickness range for implementing a flame-retardant composite material including an insulating layer including a plurality of unit insulating layers. As the flame-retardant composite material has the above-described structure, it is possible to reduce the total thickness, ensure the safety of the battery module, and achieve improvement of energy density and weight reduction of the battery module.

As described above, when the insulating layer included in the flame-retardant composite material includes a plurality of unit insulating layers, a thickness of the unit insulating layer located on the inside may be thicker than a thickness of the unit insulating layer located on the outermost side. Through this, excellent durability may be achieved.

For example, when the flame-retardant composite material includes a first unit insulating layer, a second unit insulating layer, and a third unit insulating layer that are sequentially stacked, a thickness (T₂) of the second unit insulating layer, which is the inner layer, may be made thicker than a thickness (T₁) of the first unit insulating layer and a thickness (T₃) of the third unit insulating layer, which are the outermost layers. Specifically, a thickness ratio of T₂ to T₁ may be 1.1:1 to 2:1, and more specifically, 1.3:1 to 2:1. In addition, a thickness ratio of T₂ to T₃ may be 1.1:1 to 2:1, and more specifically, 1.3:1 to 2:1.

In an exemplary embodiment, the plurality of unit insulating layers may each independently contain, with respect to the total weight, 40 wt% to 80 wt% of inorganic long fibers, 10 wt% to 30 wt% of an organic binder, 1 wt% to 15 wt% of an inorganic filler, and 5 wt% to 20 wt% of an additive. Specifically, each of the plurality of unit insulating layers may contain, with respect to the total weight, 50 wt% to 80 wt% of inorganic long fibers, 12 wt% to 18 wt% of an organic binder, 2 wt% to 8 wt% of an inorganic filler, and 10 wt% to 20 wt% of an additive. More specifically, each of the plurality of unit insulating layers may contain, with respect to the total weight, 50 wt% to 80 wt% of inorganic long fibers, 14 wt% to 18 wt% of an organic binder, and 4 wt% to 8 wt% of an inorganic filler. Within the above-described ranges, the spread of heat or a flame may be effectively suppressed.

The additive may include a flame retardant. As described above, the flame retardant may contribute to preventing a flame from spreading to another adjacent secondary battery cell when one of the secondary battery cells ignites, and may minimize damage to the insulating layer by the flame.

### <Battery module>

Hereinafter, the battery module according to an exemplary embodiment of the present disclosure will be described in detail.

In an exemplary embodiment, the battery module is a battery module including a plurality of secondary battery cells housed in a housing member, wherein the secondary battery cell may include an electrode assembly in which a plurality of negative electrodes and positive electrodes are alternately stacked with a separator as a boundary, and a pouch exterior material surrounding the electrode assembly, and the flame-retardant composite material may be located between the plurality of secondary battery cells.

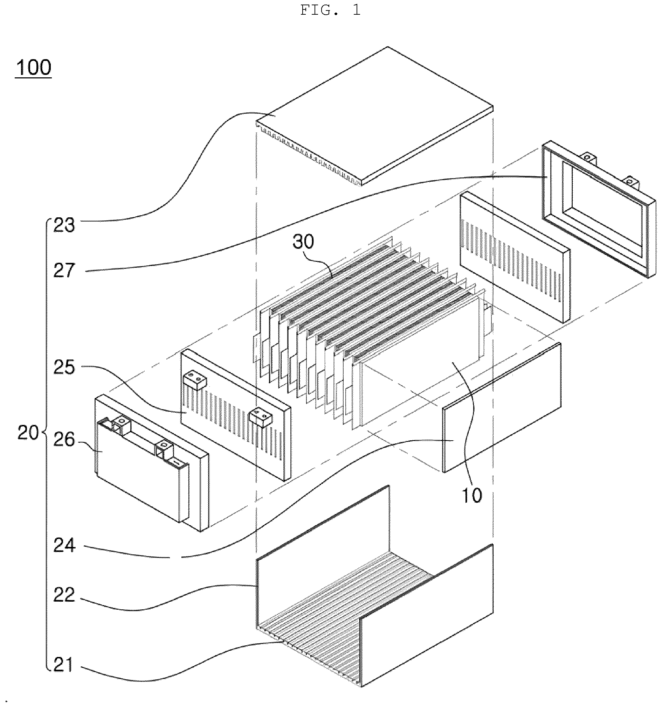

As illustrated in FIG. 1, a battery module 100 includes a plurality of secondary battery cells 10 housed in a housing member 20. The secondary battery cell 10 includes an electrode assembly in which negative electrode and positive electrode are alternately stacked with a separator as a boundary is inserted into an exterior material and with which an electrolyte is filled. The electrolyte may contain an organic solvent such as ethylene carbonate (EC), propylene carbonate (PC), diethylcarbonate (DEC), ethyl methyl carbonate (EMC), or dimethyl carbonate (DMC), and a lithium salt such as LiPF₆ or LiBF₄, but is not limited thereto. Furthermore, the electrolyte may be liquid, solid, or gel-like.

In an exemplary embodiment, the exterior material protects the electrode assembly and houses the electrolyte, and may be a pouch-type exterior material. The pouch-type exterior material houses the electrode assembly and the electrolyte by sealing the electrode assembly on three or four side surfaces. In general, in the case of a can-type battery, even when a flame occurs due to an explosion of a cell or the like, such a flame is not exposed to the outside of the can, whereas in the case of a pouch-type secondary battery cell using a pouch-type exterior material, when an explosion occurs inside the cell, the pouch-type exterior material is destroyed and a flame is exposed to the outside of the pouch, and as a result, the spread of a flame and heat to adjacent cells may easily occur. Therefore, the battery module including a flame-retardant composite material according to an exemplary embodiment of the present disclosure may be effectively applied to a pouch-type secondary battery cell.

A plurality of pouch-type secondary battery cells 10 are housed in the housing member 20 to form a battery module. The housing member 20 may serve as a body of the battery module in which the plurality of secondary battery cells 10 are housed. In addition, the housing member 20, which is a member in which a plurality of secondary battery cells 10 are housed, may protect the secondary battery cell 10, and may transfer electrical energy generated by the secondary battery cell 10 to the outside, or may transfer electrical energy from the outside to the secondary battery cell 10.

To this end, as illustrated in FIG. 1, for example, the housing member 20 may include a bottom member 21, a side wall member 22, and the like, but is not limited thereto. The bottom member 21 may allow the plurality of secondary battery cells 10 to be seated thereon and may support the plurality of secondary battery cells 10 seated thereon. Furthermore, the bottom member 21 may transfer heat generated by the secondary battery cell 10 to an external heat sink for cooling. In addition, the side wall member 22 forms a side portion of the housing member 20 and may discharge heat generated by the secondary battery cell 10 to the outside.

The housing member 20 may further include a cover member 23 provided at an upper end of the side wall member 22 to protect an upper portion of the secondary battery cell 10. In addition, the housing member 20 may include a front member 26 and a rear member 27 adjacent to the side wall member 22, and accordingly, the housing member 20 may be configured to surround the plurality of secondary battery cells 10. Further, the housing member 20 may include an additional component such as a bus bar member 25 electrically connecting the secondary battery cell to the outside. In addition, a compression member 24 may be provided on an inner surface of the side wall member 22 to more firmly protect the secondary battery cell 10.

When heat is generated by any one of the plurality of secondary battery cells 10 housed in the module, the heat may be spread to another adjacent secondary battery cell 10, and in addition, a flame caused by an explosion of any one of the plurality of secondary battery cells 10 may cause another adjacent secondary battery cell 10 to explode in succession.

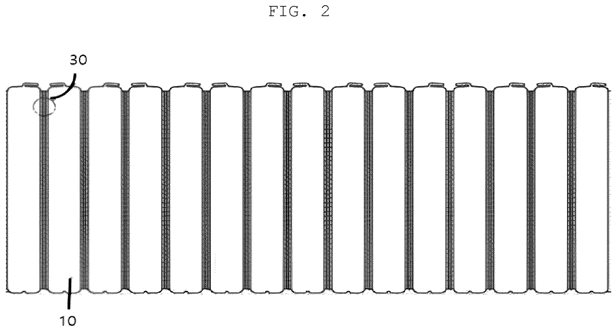

In an exemplary embodiment of the present disclosure, in order to suppress or prevent the above-described problem, as illustrated in FIG. 2, a flame-retardant composite material 30 may be provided between any one of the secondary battery cells 10 and a secondary battery cell 10 adjacent thereto among the plurality of secondary battery cells 10 housed in the battery module. The battery module 100 including the flame-retardant composite material 30 may improve the safety of the battery module by preventing heat or a flame generated by any one of the secondary battery cells 10 from spreading to a secondary battery cell 10 adjacent thereto.

### <Battery pack>

Hereinafter, a battery pack according to an exemplary embodiment of the present disclosure will be described in detail. In describing the battery pack according to an exemplary embodiment of the present disclosure in detail, since the plurality of secondary battery cells and the flame-retardant composite material included in the battery pack are the same or similar to those described above, detailed descriptions are omitted.

A battery pack according to an exemplary embodiment of the present disclosure includes a plurality of secondary battery cells; a flame-retardant composite material located between the plurality of secondary battery cells; and a pack housing for housing the plurality of secondary battery cells and the flame-retardant composite material, wherein the flame-retardant composite material includes an insulating layer containing an organic binder and an inorganic long fiber network formed by weaving a plurality of first fibers (wefts) arranged in a first direction and a plurality of second fibers (warps) arranged in a second direction intersecting the first direction.

As described above, when heat generation or ignition occurs in any one of the plurality of secondary battery cells, the battery pack including a flame-retardant composite material that may suppress the spread of heat or a flame to another adjacent secondary battery cell may effectively block thermal runaway and consecutive explosions caused by overheating of the secondary battery cell, such that the safety of the battery pack may be significantly improved.

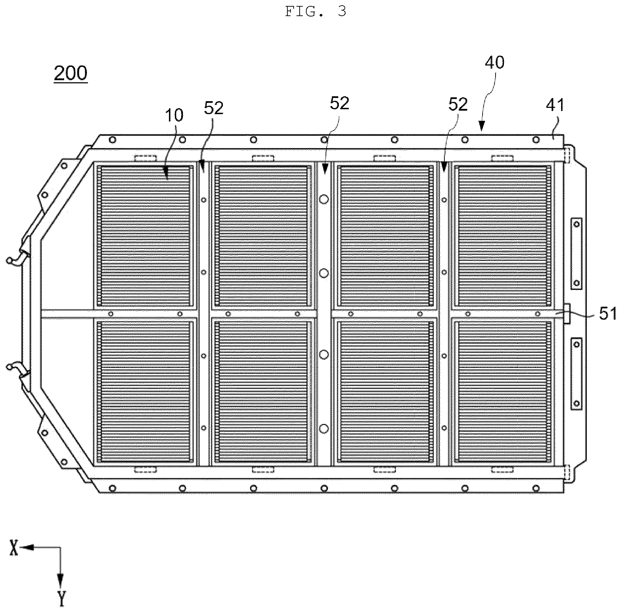

In an exemplary embodiment, referring to FIG. 3, a battery pack 200 may include a plurality of secondary battery cells 10 including a flame-retardant composite material located between adjacent secondary battery cells 10 that are housed inside a pack housing 40. The pack housing 40 may include a lower case 41 that houses the plurality of secondary battery cells 10 and an upper case (not illustrated) that is coupled to the lower case 41 and covers the plurality of secondary battery cells 10.

The lower case 41 may include a lower plate located below the plurality of secondary battery cells and a side wall extending from an edge of the lower plate to form an internal space. The side wall may include a first side wall located at both ends in a first direction of the lower case 41, for example, the X direction in FIG. 3, and a second side wall located at both ends in a second direction perpendicular to the first direction, for example, the Y direction in FIG. 3, and the first side wall and the second side wall may be coupled to each other to form four outer surfaces of the pack housing 40.

The upper case (not illustrated) is located above the plurality of secondary battery cells 10 housed in the internal space and is coupled to the lower case 41, such that the plurality of secondary battery cells 10 may be protected from the outside. However, this is merely described as an example, and the lower plate and/or upper case may be omitted to expose the upper and/or lower portions of the plurality of secondary battery cells 10.

The internal space may include a partition wall that protrudes from the lower plate at a predetermined height to partition the internal space of the pack housing 40. The partition wall may include a first partition wall 51 disposed in one direction and a plurality of second partition walls 52 that are perpendicular to the first partition wall 51 and are spaced apart from each other. The plurality of secondary battery cells 10 may be housed in a plurality of internal spaces partitioned by the first partition wall 51 and the second partition walls 52. Therefore, at least two secondary battery cells 10 may be housed in the minimum unit housing space partitioned by the first partition wall 51 and the second partition walls 52. In this case, the plurality of secondary battery cells 10 housed in the internal space may be fixed to the lower case 41 of the pack housing 40 through a bracket member.

A venting member (not illustrated) may be installed in the pack housing 40 to discharge gas, a flame, and/or combustion materials generated by the plurality of secondary battery cells 10 to the outside of the battery pack 200. Such a venting member (not illustrated) may have a structure that is normally closed and opens when gas or the like is discharged. However, the venting member (not illustrated) may be composed of an open hole formed in the pack housing 40. The installation location and number of venting members (not illustrated) may be changed in various ways as needed.

In order to allow gas, a flame, and/or combustion materials discharged from the plurality of secondary battery cells 10 to easily move to the venting member (not illustrated), a venting passage through which gas, a flame, and combustion materials may move to the venting member (not illustrated) may be provided inside the pack housing 40. As an example, the venting passage may be formed inside the side wall, inside the first and second partition walls 51 and 52, or between the pack housing 40 and the plurality of secondary battery cells 10. Gas, a flame, combustion materials, and the like transported through the venting passage may be quickly discharged to the outside through the venting member (not illustrated). Accordingly, the stability of the battery pack may be further improved by minimizing the rapid spread of flame and heat and secondary damage resulting from this.

In an exemplary embodiment, the battery pack 200 is not limited to a structure and may have various forms. As an example, the battery pack 200 may have a structure such as a cell-to-pack or a cell-to-body, in which the plurality of secondary battery cells 10 and the flame-retardant composite material (30 in FIG. 1) located between the adjacent secondary battery cells are directly housed inside the pack housing 40. Alternatively, the battery module (100 in FIG. 1) including the plurality of secondary battery cells 10 and the flame-retardant composite material (30 in FIG. 1) located between the adjacent secondary battery cells may be housed inside the pack housing 40 to form the battery pack 200, but the present disclosure is not limited by the structure of the battery pack 200.

Hereinafter, the present disclosure will be described in detail with reference to Examples. However, the following Examples illustrate only the present disclosure, and the present disclosure is not limited by the following Examples. In this case, unless otherwise defined, all the technical terms and scientific terms used herein have the same meanings as commonly understood by those skilled in the art to which the present disclosure pertains. In addition, repeated descriptions of the same technical configuration and action as those in the related art will be omitted.

### (Example 1)

A flame-retardant composite material including an insulating layer having a thickness of 1 mm was prepared, the insulating layer containing 50 wt% of woven glass long fibers, 20 wt% of unsaturated polyvinyl ester, 13 wt% of aluminum trihydroxide, and 17 wt% of a phosphorus-based flame retardant. At this time, as the woven glass long fiber, a woven glass long fiber in which first fibers (wefts) and second fibers (warps) intersected at 60° was used.

The flame-retardant composite material was interposed between two adjacent battery cells to prepare a battery module including the flame-retardant composite material.

### (Example 2)

A battery module was prepared in the same manner as in Example 1 except that an insulating layer containing 67 wt% of woven glass long fibers, 13 wt% of unsaturated polyester, 9 wt% of aluminum trihydroxide, and 11 wt% of a phosphorus-based flame retardant was used.

### (Example 3)

A battery module was prepared in the same manner as in Example 1 except that an insulating layer containing 67 wt% of woven glass long fibers, 15 wt% of unsaturated polyester, and 18 wt% of a phosphorus-based flame retardant was used.

### (Example 4)

A battery module was prepared in the same manner as in Example 1 except that an insulating layer containing 67 wt% of woven glass long fibers, 13 wt% of unsaturated polyester, 4 wt% of aluminum trihydroxide, 5 wt% of mica, and 11 wt% of a phosphorus-based flame retardant was used.

### (Example 5)

A flame-retardant composite material having a total thickness of 1 mm, in which a plurality of unit insulating layers (a first unit insulating layer, a second unit insulating layer, and a third unit insulating layer) were sequentially stacked, was prepared. 67 wt% of woven glass long fibers, 13 wt% of unsaturated polyester, 9 wt% of aluminum trihydroxide, and 11 wt% of a phosphorus-based flame retardant were contained in each of the unit insulating layers, and a woven glass long fiber in which first fibers (wefts) and second fibers (warps) intersected at 60° was used as the woven glass long fiber. In addition, the respective unit insulating layers were stacked so that the angle between the first fibers (wefts) in each of the unit insulating layers disposed to be in contact with each other was the same.

The flame-retardant composite material was interposed between two adjacent battery cells to prepare a battery module including the flame-retardant composite material.

### (Example 6)

A battery module was prepared in the same manner as in Example 5 except that the first, second, and third unit insulating layers were stacked so that the angle between the first fibers (wefts) in each of the first unit insulting layer and the second unit insulating layer was +45° and the angle between the first fibers (wefts) in each of the second unit insulting layer and the third unit insulating layer was -45°.

### (Example 7)

A battery module was prepared in the same manner as in Example 6 except that the components contained in each layer were changed. Specifically, the battery module was prepared in the same manner as in Example 6 except that 30 wt% of woven glass long fibers, 61 wt% of unsaturated polyester, 4 wt% of aluminum trihydroxide, and 5 wt% of mica were contained in each of the unit insulating layers.

### (Example 8)

A battery module was prepared in the same manner as in Example 1 except that an insulating layer containing 80 wt% of woven glass long fibers, 13 wt% of unsaturated polyester, and 7 wt% of a bromine-based flame retardant was used.

### (Example 9)

A battery module was prepared in the same manner as in Example 1 except that an insulating layer containing 67 wt% of woven glass long fibers, 13 wt% of an epoxy resin, 4 wt% of aluminum trihydroxide, 5 wt% of mica, and 11 wt% of a phosphorus-based flame retardant was used.

### (Example 10)

A battery module was prepared in the same manner as in Example 1 except that an insulating layer containing 67 wt% of woven glass long fibers, 13 wt% of Nylon 6 (BASF, Ultramid^{®} C 60X1 V30 Black), 4 wt% of aluminum trihydroxide, 5 wt% of mica, and 11 wt% of a phosphorus-based flame retardant was used.

### (Example 11)

A battery module was prepared in the same manner as in Example 4 except that a total thickness of the flame-retardant composite material was 40 mm.

### (Example 12)

A battery module was prepared in the same manner as in Example 7 except that a flame-retardant composite material having a total thickness of 0.5 mm, in which a third unit insulating layer was not included and a first unit insulating layer and a second unit insulating layer each having a thickness of 0.25 mm were sequentially stacked.

### (Comparative Example 1)

A battery module was prepared in the same manner as in Example 1 except that an insulating layer containing 5 wt% of polymethylsilsesquioxane and 95 wt% of mica was used.

### (Comparative Example 2)

A battery module was prepared in the same manner as in Example 1 except that an insulating layer containing 45 wt% of glass short fibers, 18 wt% of unsaturated polyester, 16 wt% of aluminum trihydroxide, and 21 wt% of a phosphorus-based flame retardant was used.

### (Evaluation Examples)

Specific gravity: The specific gravity of the flame-retardant composite material was measured according to ISO 1183-1 (2019) method.

Flame retardant grade: The flame-retardant composite material was cut into a 5" × 1/2" sample and subjected to UL94 Vertical Burn (V) test to evaluate the flame retardant performance of the flame-retardant composite material.

Heat insulation performance: A butane gas torch was placed 140 mm away from one side (front surface) of the flame-retardant composite material. After generating a flame using the torch and heating one side (front surface) of the flame-retardant composite material to 1,100°C to 1,200°C, the temperature on the other side (rear surface) of the flame-retardant composite material was measured, and whether a hole was formed in the flame-retardant composite material was confirmed, thereby evaluating the insulation effect.

Evaluation of occurrence of explosion: Referring to GB/T-38031 safety test, which is one of the safety tests for a battery module, a thermal runaway phenomenon was intentionally simulated for one random battery cell inside the battery module at 1,200°C or higher. The thermal runaway phenomenon continued for 30 minutes to check whether an explosion of the battery module occurred.

Adhesion thickness evaluation: When applying an adhesive to both sides of the flame-retardant composite material, a required thickness of the adhesive was measured. As the adhesive, a double-sided tape including a substrate was used.

Evaluation of occurrence of foreign substances: The cleanliness of the battery module was evaluated according to VDA 1.9 test method. DI water was used as a solvent, and the solvent was sprayed on the battery module at a flow rate of 1.5 L/min. At this time, some parts were disassembled so that the solvent was sprayed inside the module, and the cleanliness of each part was evaluated. A total of 5.0 L of the solvent was sprayed inside the battery module for 4 minutes, and a total of 2.5 L of the solvent was sprayed outside the module for 1 minute. The solvent was discharged through a spray nozzle, a diameter of the nozzle was 2.5 mm, and a distance between the battery module and the nozzle was set at a maximum of 15 cm. The solvent sprayed on the battery module was passed through a filter to obtain foreign substances such as dust present in the battery module, and then the amount of foreign substances was measured. A polyester or polyamide filter having a mesh size of 20 um was used as the filter. In Table 1, the case where the amount of foreign substances discharged from the battery module was 200 ppm or more was marked as O, and the case where the amount of foreign substances discharged from the battery module was less than 200 ppm was marked as X.

Evaluation of occurrence of short circuit: The battery module was operated for 30 minutes in a normal operating environment to check whether a short circuit occurred in the module.

**[Table 1]**

| | | | **Example 1** | **Example 2** | **Example 3** | **Example 4** | **Comparative Example 1** | **Comparativ e Example 2** |
|---|---|---|---|---|---|---|---|---|
| **Insulati ng layer** | | **Inorganic fiber** | Woven glass long fiber 50 wt% | Woven glass long fiber 67 wt% | Woven glass long fiber 67 wt% | Woven glass long fiber 67 wt% | - | Glass short liber 45 wt% |
| | | **Binder resin** | Unsaturated polyester 70 wl% | Unsaturated polyester 13 wt % | Unsaturated polyester 15 wt% | Unsaturated polyester 13 wt% | Polymethylsil sesquioxane 5 wt% | Unsaturated d polyester 18 wt% |
| | | **Inorganic filler** | Aluminum hydroxi do 13 wt% | Aluminum hydroxide 9 wt% | - | Aluminum hydroxide 4 wt% Mica 5 wt% | Mica 95 wt% | Aluminum hydroxide 16 wt% |
| | | **Flame retardant** | Phosphorus-based flame retardant 17 wt% | Phosphorus-based flame retardant 11 wt% | Phosphorus-based flame retardant 18 wt% | Phosphorus-based flame retardant 11 wL% | - | Phosphorus -based flame retardant 21 wt% |
| **Flame-retardant composite material thickness** | | | 1 mm | 1 mm | 1 mm | 1 mm | 1 mm | 1 mm |
| **Specific gravity (g/cm³)** | | | 1.9 | 2.1 | 2.1 | 2.1 | 2.4 | 1.8 |
| **UL94 Vertical test** | | | V0 | V0 | V0 | V0 | V0 | V0 |
| **Torch test** | **Front surface temperature** | | 1,100°C | 1,100°C | 1,100°C | 1,100°C | 1,100°C | 1,100°C |
| | **Rear surface temperature** | | 474°C | 386°C | 419°C | 362°C | 420°C | 572°C |
| | | **Spread of flame on rear surface** | X | X | X | X | X | O |
| **Adhesive thickness** | | | 0.2 mm | 0.2 mm | 0.2 mm | 0.7 mm | 1.0 mm | 0.2 mm |
| **Occurrence of foreign substances** | | | X | X | X | X | O | X |
| **Occurrence of explosion** | | | X | X | X | X | O | X |
| **Occurrence of short circuit** | | | X | X | X | X | X | O |

**[Table 2]**

| | | **Example 5** | **Example 6** | **Example 7** |
|---|---|---|---|---|
| **Insulating layer** | **Inorganic fiber** | Woven glass long fiber 67 wt% | Woven glass long fiber 67 wt% | Woven glass long fiber 30 wt% |
| | **Binder resin** | Unsaturated polyester 13 wt% | Unsaturated polyester 13 wt% | Unsaturated polyester 61 wt% |
| | **Inorganic filler** | Aluminum trihydroxide 9 wt% | Aluminum trihydroxide 9 wt% | Aluminum trihydroxide 4 wt% |
| | | | | Mica 5 wt% |
| | **Flame retardant** | Phosphorus-based flame retardant 11 wt% | Phosphorus-based flame retardant 11 wt % | - |
| **First unit insulating layer angle** | | 0° (weft)/90°(warp) | 0° (weft)//90° (warp) | 0° (weft)//90°(warp) |
| **Second unit insulating layer angle** | | 0° (weft)/90° (warp) | +45° (weft) //-45° (warp) | +45°(weft)//- 45°(warp) |
| **Third unit insulating layer angle** | | 0° (weft)/90° (warp) | 0° (weft)//90° (warp) | 0° (weft)//90° (warp) |
| **Flame-retardant composite material thickness** | | 1 mm | 1 mm | 1 mm |
| **Specific gravity (g/cm³)** | | 2.1 | 2.1 | 1.6 |
| **UL94 Vertical test** | | V0 | V0 | V0 to V2 |
| **Torch test** | **Front surface temperature** | 1,100°C | 1,100°C | 1,100°C |
| | **Rear surface temperature** | 386°C | 372°C | 567°C |
| **Occurrence of explosion** | | X | X | X |
| **Occurrence of short circuit** | | X | X | X |

**[Table 3]**

| | | **Example 8** | **Example 9** | **Example 10** | **Example 11** | **Example 12** |
|---|---|---|---|---|---|---|
| **Insulating layer** | **Inorganic fiber** | Woven glass long fiber 80 wt% | Woven glass long fiber 67 wt% | Woven glass long fiber 67 wt% | Woven glass long fiber 67 wt% | Woven glass long fiber 30 wt% |
| | **Binder resin** | Unsaturated polyester 13 wt% | Epoxy resin 13 wt% | Nylon 6 13 wt% | Unsaturated polyester 13 wt% | Unsaturated polyester 61 wt% |
| | **Inorganic filler** | - | Aluminum hydroxide 4 wt% | Aluminum hydroxide 4 wt% | Aluminum hydroxide 4 wt% | Aluminum trihydroxide 4 wt% |
| | | | Mica 5 wt% | Mica 5 wt% | Mica 5 wt% | Mica 5 wt% |
| | **Flame retardant** | Bromine-based flame retardant 7 wt% | Phosphorus-based flame retardant 11 wt% | Phosphorus-based flame retardant 11 wt% | Phosphorus-based flame retardant 11 wt% | - |
| **Flame-retardant composite material thickness** | | 1 mm | 1 mm | 1 mm | 40 mm | 0.5 mm |
| **Specific gravity (g/cm³)** | | 2.2 | 2.1 | 2.1 | 2.1 | 1.6 |
| **UL94 Vertical test** | | V0 | V0 | V0 | V0 | V0 to V2 |
| **Torch test** | **Front surface temperature** | 1,100°C | 1,100°C | 1,100°C | 1,100°C | 1,100°C |
| | **Rear surface temperature** | 370°C | 365°C | 398°C | 48°C | 590°C |
| | **Spread of flame on rear surface** | X | X | X | X | X |
| **Adhesive thickness** | | 0.2 mm | 0.2 mm | 0.2 mm | 0.2 mm | 0.2 mm |
| **Occurrence of foreign substances** | | X | X | X | X | X |
| **Occurrence of explosion** | | X | X | X | X | X |
| **Occurrence of short circuit** | | X | X | X | X | X |

As shown in Tables 1 to 3, in Examples 1 to 12, since the rear surface temperature in the torch test was 600°C or lower, the insulation effect was excellent, the battery module did not explode even when the thermal runway phenomenon lasted for 30 minutes, and even under the normal operation, a short circuit did not occur in the battery module and the battery module was stably operated.

Specifically, in Examples 2 and 3, even though the content of aluminum hydroxide was decreased as the content of woven glass long fibers was increased, the insulation effect was more excellent than that in Example 1.

In Example 4, it was confirmed that, as a combination of 4 wt% of aluminum hydroxide and 5 wt% of mica was used as an inorganic filler, the insulation effect was more excellent than those in Examples 1 to 3.

In addition, in Examples 6 and 7, it was confirmed that, as a plurality of unit insulating layers were included and the unit insulating layers were stacked by controlling the angle between the first fibers (wefts) in each unit insulating layer, the insulation effect was excellent. Among them, in Example 7 in which the content of woven glass long fibers was 30 wt%, which was less than in Example 6, and the insulating layer did not contain a flame retardant, as a result of the torch test, the rear surface temperature was 567°C, which showed that the insulation performance was lower than that in Example 6, but the insulation performance was improved compared to that in Comparative Example 2 in which glass short fibers were included. In particular, in Example 7, unlike Comparative Examples 1 and 2, the explosion and short circuit of the battery module did not occur, and as a result, the long-term stability was excellent, and the specific gravity of the insulating layer was low at 1.6 g/cm³. That is, the specific gravity of the insulating layer was minimized by controlling the angle between the respective unit insulating layers, such that it was advantageous in achieving weight reduction of the battery module, and the excellent insulation effect and the excellent stability of the battery module were secured.

In Example 8 in which an inorganic filler was not contained and a bromine-based flame retardant was contained instead of a phosphorus-based flame retardant in the insulating layer, in the torch test, the rear surface temperature was measured at 370°C, and in the stability evaluation, an explosion or short circuit of the battery module did not occur. Even though an inorganic filler was not contained in the insulating layer, the content of woven glass long fibers was increased to 80 wt%, and the insulation performance was excellent. Since an inorganic filler was not contained in the flame-retardant composite material, long-term stability was improved as there was no dust generated from an inorganic filler.

In Examples 9 and 10, the battery modules including the insulating layers containing an epoxy resin and Nylon 6, respectively, as binder resins were obtained. It was confirmed that, even when a polymer resin other than unsaturated polyester was used as a binder resin, in the torch test, the rear surface temperatures were measured at 365°C and 398°C, respectively, which showed that the insulation performance was excellent, and an explosion or short circuit of the battery module did not occur, which showed that the stability of the battery module was significantly improved.

In Example 11 in which the total thickness of the flame-retardant composite material was 40 mm, the insulation performance and stability were excellent, and in Example 12, even though the total thickness of the flame-retardant composite material was reduced to 0.5 mm, in the torch test, the rear surface temperature was measured at 590°C, and in the stability evaluation, an explosion or short circuit of the battery module did not occur. It was confirmed that, as the angle between the first fibers (wefts) in each unit insulating layer included in the flame-retardant composite material was controlled, the volume occupied by the flame-retardant composite material was minimized in the battery module, and the safety and insulation performance of the battery module were achieved.

Accordingly, the flame-retardant composite material according to an embodiment of the present disclosure, during the torch test, the spread of flame on the rear surface did not occur, effectively blocking the spread of flame from the front surface to the rear surface of the flame-retardant composite material, and the foreign substances were present in an amount of less than 200 ppm inside and outside the battery module. The amount of dust generated from the flame-retardant composite material was significantly reduced, such that the problem of damage to the battery module caused by foreign substances was solved. In addition, the thickness of the adhesive located between the secondary battery cell and the flame-retardant composite material was measured to be 0.2 mm. The energy density per area and volume of the battery module was increased by minimizing the thickness of the adhesive, contributing to improving the performance of the battery module and reducing the manufacturing cost of the battery module.

On the other hand, in Comparative Example 1, it was confirmed that, as 95 wt% of mica was contained in the insulating layer without woven inorganic long fibers, dust was generated and 200 ppm or more of foreign substances were present in the battery module, and as a result, the battery module could not be operated normally due to an explosion during battery operation, and the specific gravity was 2.4 g/cm³, which was not appropriate for weight reduction when applied to an electric vehicle battery or the like. In addition, in order to attach the flame-retardant composite material between the secondary battery cells, the adhesive had to be applied to a thickness of 1 mm between the flame-retardant composite material and the secondary battery cell. As the thickness of the adhesive increased fivefold compared to Example 1, the energy density per area and energy density per volume of the battery module were significantly decreased.

In Comparative Example 2, as the glass short fibers rather than woven glass long fibers were contained in the insulating layer, in the torch test, the rear surface temperature was increased to 572°C, and the insulation effect was reduced compared to Examples 1 to 4 with the same thickness of the flame-retardant composite material, leading to the spread of flame on the rear surface of the flame-retardant composite material. When the thermal runaway phenomenon of the battery module according to Comparative Example 2 continued for 30 minutes, a short circuit of the battery module occurred. Accordingly, it was confirmed that when the flame-retardant composite material of Comparative Example 2 was used, the heat shielding and flame spread blocking effects were significantly low.

As set forth above, according to an exemplary embodiment of the present disclosure, during a normal operation of the battery module, a short circuit caused by dust or debris may be prevented.

According to an exemplary embodiment of the present disclosure, when the battery module ignites, the spread of heat or a flame may be suppressed.

According to an exemplary embodiment of the present disclosure, the flame-retardant composite material may achieve excellent flame retardancy while having weight reduction characteristics.

Hereinabove, although the present disclosure has been described by specific matters, limited exemplary embodiments, and drawings, they have been provided only for assisting in the entire understanding of the present disclosure. Therefore, the present disclosure is not limited to the exemplary embodiments. Various modifications and changes may be made by those skilled in the art to which the present disclosure pertains from this description.

Therefore, the spirit of the present disclosure should not be limited to the described exemplary embodiments, but the claims and all modifications equal or equivalent to the claims are intended to fall within the spirit of the present disclosure.

### [Detailed Description of Main Elements]

| | | | |
|---|---|---|---|
| 10: | Secondary battery cell | 20: | Housing member |
| 21: | Bottom member | 22: | Side wall member |
| 23: | Cover member | 24: | Compression member |
| 25: | Bus bar member | 26: | Front member |
| 27: | Rear member | 30: | Flame-retardant composite material |
| 40: | Pack housing | 41: | Lower case |
| 51: | First partition wall | 52: | Second partition wall |
| 100: | Battery module | 200: | Battery pack |

## Claims

1. A battery module comprising a plurality of secondary battery cells housed in a housing member,
wherein a flame-retardant composite material is located between the plurality of secondary battery cells, and
the flame-retardant composite material includes an insulating layer containing an organic binder and an inorganic long fiber network formed by weaving a plurality of first fibers (wefts) arranged in a first direction and a plurality of second fibers (warps) arranged in a second direction intersecting the first direction.

2. The battery module of claim 1, wherein the insulating layer further contains an inorganic filler.

3. The battery module of claim 1 or 2, wherein in the insulating layer, the inorganic filler is uniformly distributed in the inorganic long fiber network.

4. The battery module of claim 2 or 3, wherein the inorganic filler includes one or two selected from an endothermic material and a thermally expandable material.

5. The battery module of any preceding claim, wherein the insulating layer further contains an additive, and the additive includes a flame retardant.

6. The battery module of any preceding claim, wherein the insulating layer includes a plurality of unit insulating layers.

7. The battery module of claim 6, wherein the directions of the first fibers (wefts) in each of the unit insulating layers disposed to be in contact with each other in the plurality of unit insulating layers are the same as or different from each other.

8. The battery module of claim 6, wherein the unit insulating layer further contains an inorganic filler.

9. The battery module of claim 6, wherein the plurality of unit insulating layers independently contain, with respect to the total weight, 40 to 80 wt% of inorganic long fibers, 10 to 30 wt% of an organic binder, 1 to 15 wt% of an inorganic filler, and 5 to 20 wt% of an additive.

10. The battery module of claim 4, wherein the endothermic material includes one or two or more selected from aluminum hydroxide, talc, calcium carbonate, diatomaceous earth, titanium oxide, zeolite, and white carbon.

11. The battery module of claim 4, wherein the thermally expandable material includes one or two or more selected from mica, biotite, muscovite, vermiculite, kaolin, thermally expandable graphite, perlite, and bentonite.

12. The battery module of any preceding claim, wherein the inorganic long fiber includes a glass long fiber.

13. The battery module of any preceding claim, wherein the organic binder includes a thermosetting resin, a thermoplastic resin, or a combination thereof.

14. The battery module of any preceding claim, wherein a thickness of the flame-retardant composite material is 0.12 mm to 40 mm.

15. A battery pack comprising:
a plurality of secondary battery cells;
a flame-retardant composite material located between the plurality of secondary battery cells; and
a pack housing for housing the plurality of secondary battery cells and the flame-retardant composite material,
wherein the flame-retardant composite material includes an insulating layer containing an organic binder and an inorganic long fiber network formed by weaving a plurality of first fibers (wefts) arranged in a first direction and a plurality of second fibers (warps) arranged in a second direction intersecting the first direction.
